# EUROPEAN PATENT APPLICATION

(11) **EP 4 704 158 A1**
(43) Date of publication of application: **04.03.2026**
(21) Application number: 24796618.7
(22) Date of filing: 13.03.2024
(51) Int. Cl.: H01M 4/02, H01M 4/04, H01M 4/13, H01M 4/139, H01M 10/04, H01M 10/058

(54) **ELECTRODE, BATTERY, AND METHOD FOR MANUFACTURING POSITIVE ELECTRODE**

(30) Priority: 28.04.2023 JP 2023075296
(71) Applicant: Vehicle Energy Japan Inc., Hitachinaka-shi, Ibaraki 312-8505 (JP)
(72) Inventor: KUROKI, Yasutaka, Hitachinaka-shi, Ibaraki 312-8505 (JP)
(74) Representative: Strehl & Partner mbB
(86) International application number: PCT/JP2024/009798
(87) International publication number: WO 2024/224860

(57) **Abstract**

An electrode (positive electrode 100) has a collector layer (positive electrode collector layer 110), an active material layer (positive electrode active material layer 120), and an intermediate layer (130). The active material layer (positive electrode active material layer 120) is stacked on and joined with the collector layer (positive electrode collector layer 110), and contains an active material (positive electrode active material 121). The intermediate layer (130) is disposed intermediate along a stacking direction (Z) between a side of an end portion (110b) of the collector layer (positive electrode collector layer 110) and an end portion (120b) of the active material layer (positive electrode active material layer 120), and joined with the collector layer (positive electrode collector layer 110) and the active material layer (positive electrode active material layer 120).

## Description

### Technical Field

The present invention relates to an electrode, a battery, and a method of manufacturing a positive electrode.

### Background Art

Technologies on electrodes in which an active material layer joined with a collector layer have heretofore been known (see, for example, Patent Document 1).

### Prior Art Document

### Patent Document

Patent Document 1: JP-3613400-B

### Summary of the Invention

### Problem to be Solved by the Invention

There is an outstanding demand for an electrode in which an active material layer is suppressed at end portions thereof from becoming relatively thicker than the rest of the active material layer.

### Means for Solving the Problem

An electrode of the present invention has a collector layer, an active material layer, and an intermediate layer. The active material layer is stacked on and joined with the collector layer, and contains an active material. The intermediate layer is disposed intermediate along a stacking direction between a side of an end portion of the collector layer and an end portion of the active material layer, and joined with the collector layer and the active material layer.

A battery of the present invention has a positive electrode, a negative electrode, and an insulator disposed between the positive electrode and the negative electrode. At least one of the positive electrode and the negative electrode is the electrode described above.

A method of manufacturing a positive electrode according to the present invention is a method of manufacturing a positive electrode having a positive electrode collector layer, a positive electrode active material layer stacked on and joined with the positive electrode collector layer, and containing a positive electrode active material, and an intermediate layer disposed intermediate along a stacking direction between a side of an end portion of the positive electrode collector layer and an end portion of the positive electrode active material layer, and joined with the positive electrode collector layer and the positive electrode active material layer. In the manufacturing method for the positive electrode, the positive electrode collector layer that contains aluminum is used. Also used, in the manufacturing method for the positive electrode, is an intermediate layer slurry that contains particles and a solvent having volatility, and is to form the intermediate layer after being applied to the positive electrode collector layer. Additionally used, in the manufacturing method for the positive electrode, is a positive electrode active material layer slurry that contains the positive electrode active material and the solvent having volatility, and is to form the positive electrode active material layer after being applied to the positive electrode collector layer and the intermediate layer slurry. The manufacturing method for the positive electrode includes a coating step of applying the intermediate layer slurry, and the positive electrode active material layer slurry. In the coating step, the intermediate layer slurry is applied onto the positive electrode collector layer with a contact angle set to 1° or greater and 35° or smaller, and the positive electrode active material layer slurry is applied onto the positive electrode collector layer and the intermediate layer slurry.

### Advantages of the Invention

An electrode, in which an active material layer is suppressed at end portions thereof from becoming relatively thicker than the rest of the active material layer, and a battery, which includes such an electrode, can be obtained.

### Brief Description of the Drawings

FIG. 1 is a perspective view depicting a battery 1 of a first embodiment.
FIG. 2 is a perspective view depicting a charge/discharge body 10 in the battery 1.
FIG. 3 is a cross-sectional view depicting the charge/discharge body 10 along 3A-3B in FIG. 2.
FIG. 4 is a cross-sectional view depicting the charge/discharge body 10 in a region 4 in FIG. 3.
FIG. 5 is a side view schematically depicting a manufacturing method for a positive electrode 100.
FIG. 6 is a top view depicting, in a schematic view, coated states of slurries on a positive electrode collector layer 110 in FIG. 5.
FIG. 7 is a side view depicting, in a schematic view, coated states of a positive electrode active material slurry 1110 and an intermediate layer slurry 1200 applied onto the positive electrode collector layer 110.
FIG. 8 is a graph illustrating measurement results of profiles of a positive electrode active material layer 120 of the positive electrode 100 in the first embodiment and a positive electrode active material layer of a comparative example.
FIG. 9 is a cross-sectional view depicting a charge/discharge body 20 in a battery of a second embodiment.
FIG. 10 is a cross-sectional view depicting a charge/discharge body 30 in a battery of a third embodiment.

### Modes for Carrying Out the Invention

About embodiments for practicing the present invention, a description will be made with reference to the drawings. In the individual figures, the sizes and rates of constituent members may be exaggerated to facilitate understanding of embodiments. In a cross-sectional view of each active material layer or the like, an adjacent active material is depicted in a state of being out of contact with one another, so that a binder and additive around the active material are depicted. In the individual figures, identical elements are identified by the same reference characters. A widthwise direction X of a positive electrode 100, negative electrode 200, and separators 300 in a stacked state is indicated by an arrow. A lengthwise direction Y of the positive electrode 100, negative electrode 200, and separators 300 in the stacked state is indicated by another arrow. A stacking direction Z of the positive electrode 100, negative electrode 200, and separators 300 in the stacked state is indicated by a further arrow.

An electrode in each embodiment corresponding to the present invention will be described as a positive electrode. As the electrode in each embodiment corresponding to the present invention, a negative electrode may also be included. A battery 1 of each embodiment corresponding to the present invention will be described as a rectangular parallelepiped battery. As the battery 1 of each embodiment corresponding to the present invention, a cylindrical battery is also included.

### (Configurations of Battery 1 of First Embodiment with Positive Electrode 100 included Therein)

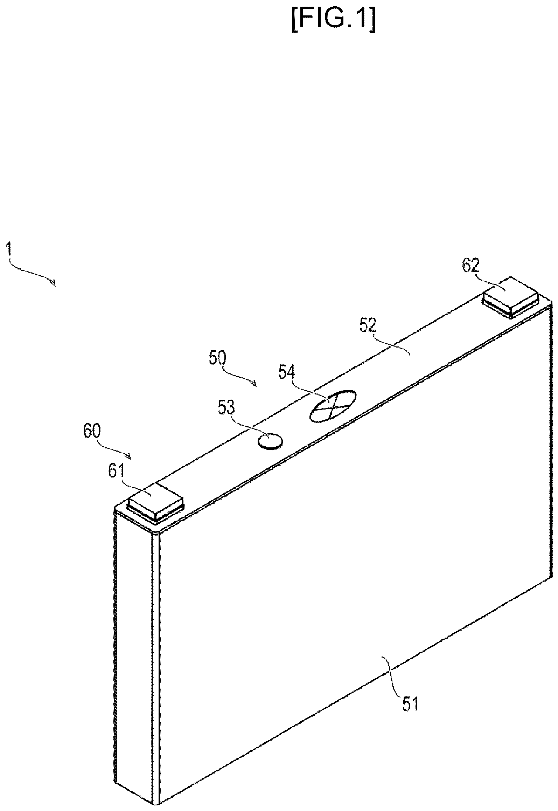

About the configurations of the battery 1 of the first embodiment with the positive electrode 100 included therein, a description will be made with reference to FIGS. 1 to 4.

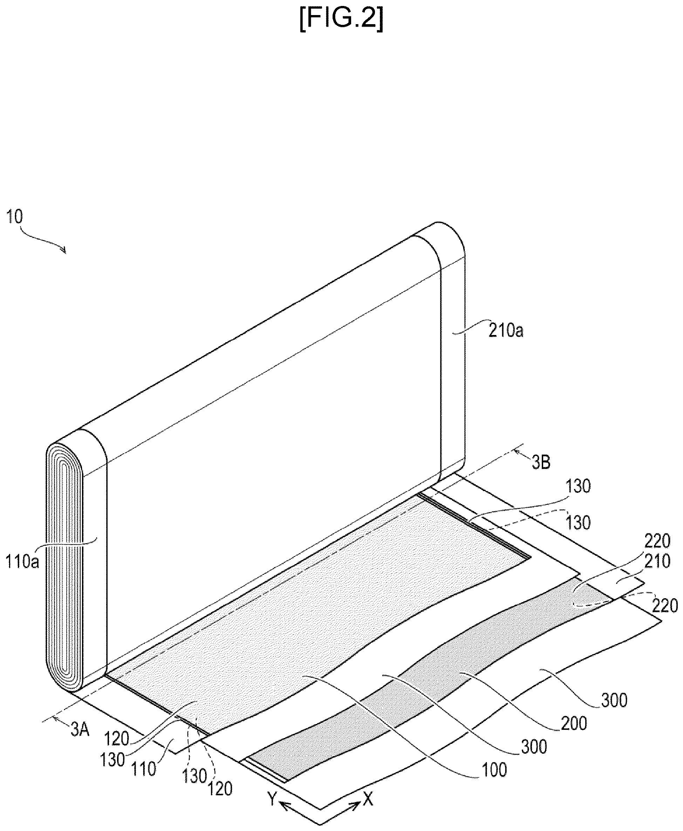

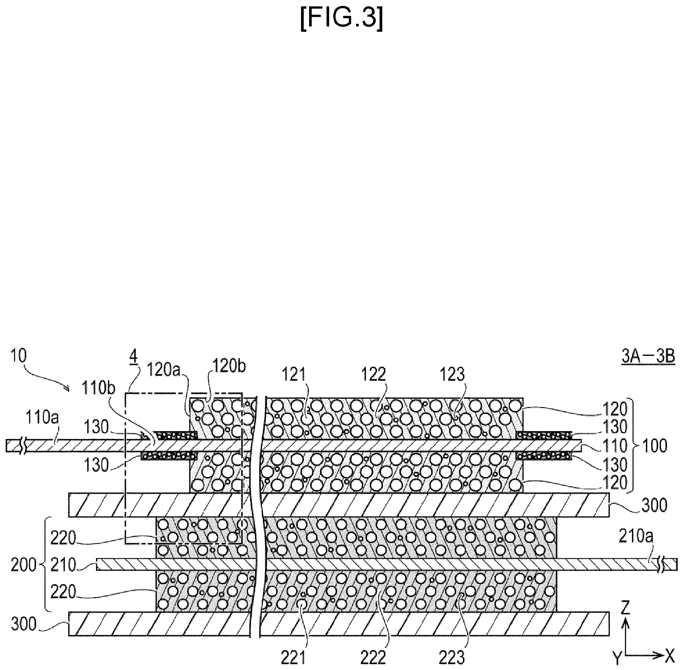

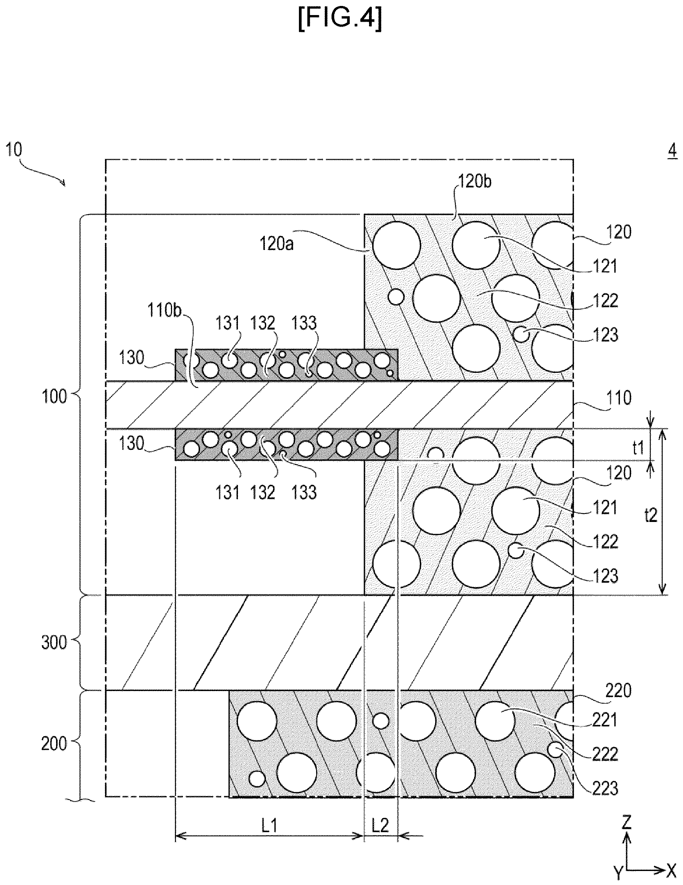

FIG. 1 is a perspective view depicting the battery 1 of the first embodiment. FIG. 2 is a perspective view depicting a charge/discharge body 10 in the battery 1. FIG. 3 is a cross-sectional view depicting the charge/discharge body 10 along 3A-3B in FIG. 2. FIG. 4 is a cross-sectional view depicting the charge/discharge body 10 in a region 4 in FIG. 3.

The battery 1 is, for example, a lithium ion secondary battery. The battery 1 includes the charge/discharge body 10, an outer package 50, and outer terminals 60 as depicted in FIGS. 1 to 4. A description will hereinafter be made about principal configurations incorporated in the battery 1.

The charge/discharge body 10 is charged, and is discharged. The charge/discharge body 10 depicted in FIGS. 2 and 3 includes the positive electrode 100, the negative electrode 200, the separators 300, and an electrolyte (what is called electrolyte solution). The charge/discharge body 10 is formed by stacking the positive electrode 100, negative electrode 200, and two separators 300 in an order of the positive electrode 100, one of the separators 300, the negative electrode 200, and the other separator 300, and winding them in a parallelepipedal shape. In the charge/discharge body 10, the separators 300, in particular, are soaked with the electrolyte. Joined with a positive electrode collector plate and a negative electrode collector plate, the charge/discharge body 10 is covered by an insulating sheet.

The positive electrode 100 (electrode) contains a positive electrode collector layer 110, positive electrode active material layers 120, and intermediate layers 130 as depicted in FIG. 3.

The positive electrode collector layer 110 (collector layer) is formed, for example, in an elongated shape. Described specifically, the positive electrode collector layer 110 is formed in a foil shape. At one end portion in the widthwise direction X of the positive electrode collector layer 110, a positive electrode collector portion 110a is disposed along the lengthwise direction Y. The positive electrode collector layer 110 is formed, for example, with aluminum or an aluminum alloy. For the positive electrode collector layer 110, JIS A3003 is used, for example. A3003 is a non-heat treated type, and is an Al-Mn based alloy. A thickness in the stacking direction Z of the positive electrode collector layer 110 is, for example, 10 µm. The thickness of the positive electrode collector layer 110 is selected, for example, in a range of 5 µm to 30 µm.

The positive electrode active material layers 120 (active material layers) are disposed on the positive electrode collector layer 110. Stacked on and joined with both side surfaces of the positive electrode collector layer 110, the positive electrode active material layers 120 oppose each other along the stacking direction Z. A thickness in the stacking direction Z of each positive electrode active material layer 120 is, for example, 30 or 40 µm. The thickness of each positive electrode active material layer 120 is selected, for example, in a range of 10 to 200 µm.

In the positive electrode active material layers 120, a positive electrode active material 121, a positive electrode binder 122, and a positive electrode conductive aid 123 are contained.

As the positive electrode active material 121 (active material), a lithium-containing composite oxide is used, for example. The lithium-containing composite oxide is, for example, metal elements such as nickel (Ni), cobalt (Co), and manganese (Mn), and lithium (Li). The positive electrode active material 121 is formed in a particle shape. An average particle size (D50) of the positive electrode active material 121 is, for example, 25 µm. The average particle size (D50) of the positive electrode active material 121 is selected, for example, in a range of 1 µm to 50 µm.

The positive electrode binder 122 binds the positive active material 121 together. Used examples of the positive electrode binder 122 include polyvinylidene difluoride (PVdF), polytetrafluoroethylene (PTFE), polyethylene (PE), polystyrene, polybutadiene, polyacrylonitrile, polyvinyl fluoride, polypropylene fluoride, polychloroprene fluoride, butyl rubber, nitrile rubber, styrene butadiene rubber (SBR), polysulfide rubber, nitrocellulose, cyanoethylcellulose, various latexes, acrylic resins, or a mixture thereof.

The positive electrode conductive aid 123 improves characteristics of the positive electrode 100. The positive electrode conductive aid 123 is incorporated as a mixture with the positive electrode active material 121, and enhances electrical conductivity between the positive electrode collector layer 110 and the positive electrode active material 121. In other words, the positive electrode conductive aid 123 secures conductive paths between the positive electrode collector layer 110 and the positive electrode active material 121 in the positive electrode 100. As the positive electrode conductive aid 123, a carbonaceous material is used, for example. The carbonaceous material is, for example, crystalline carbon, amorphous carbon, or a mixture thereof. Crystalline carbon is, for example, artificial graphite, natural graphite, or a mixture thereof. Natural graphite is, for example, flake graphite, vein graphite, or earthy graphite. Amorphous graphite is, for example, carbon black. Carbon black is, for example, acetylene black, ketchen black, channel black, furnace black, lump black, thermal black, or a mixture thereof.

Each intermediate layer 130 (intermediate layer) is disposed intermediate along the stacking direction Z between a side of an end portion 110b of the positive electrode collector layer 110 and an end portion 120b of the positive electrode active material layer 120 as depicted in FIG. 4. The intermediate layer 130 is joined with the positive electrode collector layer 110 and positive electrode active material layer 120.

Each intermediate layer 130 extends while crossing to the end portion 120b of the positive electrode active material layer 120 along the widthwise direction X (cross direction) intersecting the stacking direction Z, and is joined with the positive electrode collector layer 110, as depicted in FIG. 4. The expression "each intermediate layer 130 extends while crossing to the end portion 120b of the positive electrode active material layer 120" means that the intermediate layer 130 extends while crossing a side portion 120a of the positive electrode active material layer 120. The intermediate layer 130 is longer in a first length L1 along the widthwise direction X of a portion remote from the positive electrode active material layer 120 than in a second length L2 along the widthwise direction X of a portion joined with the positive electrode active material layer 120. The portion remote from the positive electrode active material layer 120 is a portion joined with only the positive electrode collector layer 110. The portion joined with the positive electrode active material layer 120 is a portion joined with both the positive electrode collector layer 110 and the positive electrode active material layer 120. The intermediate layer 130 opposes the negative electrode active material layer 220 of the negative electrode 200 with the separator 300 interposed therebetween. The intermediate layer 130 has a thickness t1 along the stacking direction Z in a region where the intermediate layer 130 is joined with the positive electrode active material layer 120, and the thickness t1 is 1/10 or greater and 1/2 or smaller of a thickness t2 in the stacking direction Z of the positive electrode active material layer 120.

In the intermediate layers 130, particles 131, a binder 132, and an additive 133 are contained as depicted in FIG. 4.

The particles 131 are an inorganic material or an organic material. The particles 131 are, for example, alumina or boehmite. Organic particles are dispersed more easily compared with inorganic particles. In particular, acrylic particles are relatively easier for dispersion in a solvent. The particles 131 have an average particle size (D50) of 0.5 µm or greater and 5.0 µm or smaller. The particles 131 have insulating properties. The particles 131 preferably have heat resistance.

The binder 132 binds the particles 131 together. The binder 132 has insulating properties.

The additive 133 uniformly disperses, for example, the particles 131 and the binder 132. The additive 133 is not essential for the intermediate layers 130.

The positive electrode 100 may include an insulating layer that covers the positive electrode active material layer 120. The insulating layer has heat resistance. The insulating layer contains, for example, an inorganic material or organic material, and a binder. The inorganic material is, for example, alumina particles.

The negative electrode 200 includes a negative electrode collector layer 210 and negative electrode active material layers 220 as depicted in FIG. 3.

The negative electrode collector layer 210 is formed, for example, in an elongated shape. Described specifically, the negative electrode collector layer 210 is formed in a foil shape. At one end portion in the widthwise direction X of the negative electrode collector layer 210, a negative electrode collector portion 210a is disposed along the lengthwise direction Y. The negative electrode collector portion 210a of the negative electrode collector layer 210 opposes the positive electrode collector portion 110a of the positive electrode collector layer 110 in the widthwise direction X. The negative electrode collector layer 210 is formed, for example, with copper or a copper alloy. A thickness along the stacking direction Z of the negative electrode collector layer 210 is, for example, 10 µm. The thickness of the negative electrode collector layer 210 is selected, for example, in a range of 5 to 30 µm.

The negative electrode active material layers 220 are disposed on the negative electrode collector layer 210. Stacked on and joined with both side surfaces of the negative electrode collector layer 210, the negative electrode active material layers 220 oppose each other along the stacking direction Z. The negative electrode active material layers 220 have a longer width along the widthwise direction X as compared with the positive electrode active material layers 120. With the negative electrode 200 opposing the positive electrode 100 with the separator 300 interposed therebetween, both ends in the widthwise direction X of each negative electrode active material layer 220 are located outside in the widthwise direction X of corresponding both ends in the widthwise direction X of the positive electrode active material layer 120. A thickness along the stacking direction Z of each negative electrode active material layer 220 is, for example, 30 or 40 µm. The thickness of each negative electrode active material layer 220 is selected, for example, in a range of 10 to 200 µm.

In the negative electrode active material layers 220, a negative electrode active material 221 and a negative electrode binder 222 are contained. In the negative electrode active material layers 220, a negative electrode conductive aid 223 may be contained.

As the negative electrode active material 221, carbon is used, for example. Carbon is, for example, graphite, hardly graphitizable carbon (hard carbon), or easily graphitizable carbon (soft carbon). Graphite is, for example, natural graphite or artificial graphite. Natural graphite is, for example, flake graphite, vein graphite, or earthy graphite. The negative electrode active material 221 is formed in a particle shape. An average particle size (D50) of the negative electrode active material 221 is, for example, 25 µm. The average particle size (D50) of the negative electrode active material 221 is selected, for example, in a range of 1 to 50 µm.

The negative electrode binder 222 binds the negative active material 221 together. As the negative electrode binder 222, similar materials as for the positive electrode binder 122 are used.

The negative electrode conductive aid 223 improves characteristics of the negative electrode 200. The negative electrode conductive aid 223 is incorporated as a mixture with the negative electrode active material 221, and enhances electrical conductivity between the negative electrode collector layer 210 and the negative electrode active material 221. In other words, the negative electrode conductive aid 223 secures conductive paths between the negative electrode collector layer 210 and the negative electrode active material 221 in the negative electrode 200.

The negative electrode 200 may include an insulating layer that covers the negative electrode active material layer 220. The insulating layer has heat resistance. The insulating layer contains, for example, an inorganic material or organic material, and a binder. The inorganic material is, for example, alumina particles.

The separator 300 insulates the positive electrode 100 and the negative electrode 200 from each other as depicted in FIG. 3. Further, the separator 300 holds the electrolyte (what is called electrolyte solution). The separator 300 is formed in an elongated shape. The separator 300 has a longer width along the widthwise direction X as compared with the negative electrode active material layer 220. With the positive electrode 100 and the negative electrode 200 opposing each other with the separator 300 interposed therebetween, in a range along the widthwise direction X of the separator 300, both ends in the widthwise direction X of each positive electrode active material layer 120 are located, and both ends in the widthwise direction X of each negative electrode active material layer 220 are also located. A thickness along the stacking direction Z of the separator 300 is, for example, 20 µm. The thickness of the separator 300 is selected, for example, in a range of 5 to 60 µm.

The separator 300 is formed with a porous material. As the porous material, polyethylene, polypropylene, a polyester, cellulose, or a polyamide is used, for example. The separator 300 may have a configuration in which a plurality of different porous materials are stacked.

The separator 300 may include an insulating layer. The insulating layer has heat resistance. The insulating layer contains, for example, an inorganic material or organic material, and a binder. The inorganic material is, for example, alumina particles.

The electrolyte allows lithium ions to travel between the positive electrode 100 and the negative electrode 200. An electrolyte is also called "an electrolyte solution."

In the electrolyte, an organic solvent and a lithium salt are contained. An additive may be contained in the electrolyte.

As the organic solvent, a carbonate ester such as ethylene carbonate is used, for example. As the lithium salt, lithium hexafluorophosphate (LiPF₆) is used, for example. As the additive, lithium hexafluorophosphate (LiPF₆) is used, for example.

The outer package 50 accommodates the charge/discharge body 10. The outer package 50 includes a container 51, a lid 52, an electrolyte filling hole plug 53, and a rupture valve 54 as depicted in FIG. 1. The container 51 is formed in a rectangular parallelepiped shape. In the container 51, the charge/discharge body 10 is accommodated. The lid 52 is welded with the container 51. In the lid 52, an electrolyte filling hole is disposed. The electrolyte filling hole is a hole for filling the electrolyte (what is called electrolyte solution) into the battery 1. The electrolyte filling hole plug 53 is attached to the electrolyte filling hole in the lid 52. The electrolyte filling hole plug 53 is inserted in and welded to the electrolyte filling hole after the electrolyte has been filled into the battery 1 through the electrolyte filling hole. The rupture valve 54 is disposed in the lid 52. The rupture valve 54 is formed integrally with the lid 52. The rupture valve 54 ruptures outward of the battery 1 if the internal pressure of the battery 1 exceeds a predetermined value.

The outer terminals 60 relay an input and output of electric power between collectors disposed inside the battery 1 and electric equipment disposed outside the battery 1. The electric equipment includes, for example, a relay and inverter disposed on a vehicle. Further, outer terminals 60 disposed on a battery 1 are electrically connected to outer terminals 60 disposed on another battery 1 via bus bars, whereby an input and output of electric power are relayed between these batteries 1. The outer terminals 60 include a positive electrode terminal 61 and a negative electrode terminal 62 as depicted in FIG. 1. The positive electrode terminal 61 is electrically connected to the positive electrode collector portion 110a of the positive electrode collector layer 110 via the positive electrode collector plate. The positive electrode terminal 61 is attached to the lid 52 via a positive electrode insulating member. The negative electrode terminal 62 is electrically connected to the negative electrode collector portion 210a of the negative electrode collector layer 210 via the negative electrode collector plate. The negative electrode terminal 62 is attached to the lid 52 via a negative electrode insulating member.

### (Manufacturing Method for Positive Electrode 100 in First Embodiment)

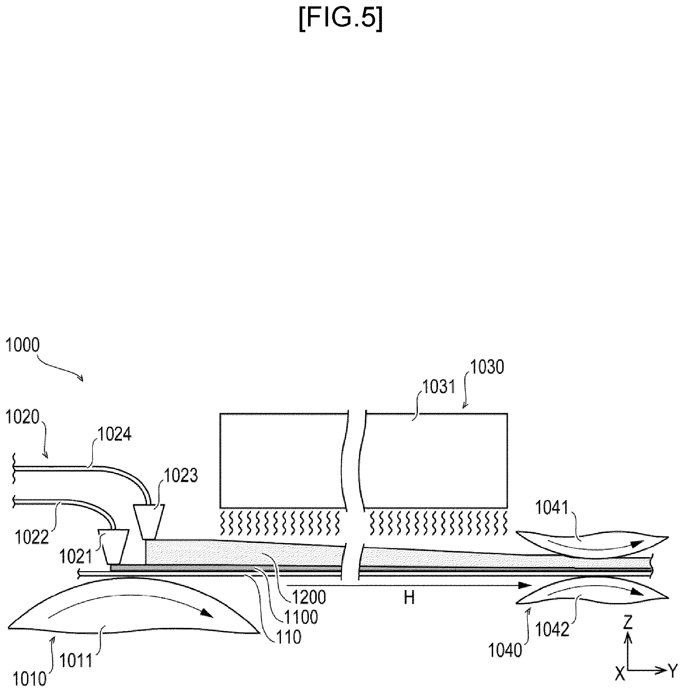

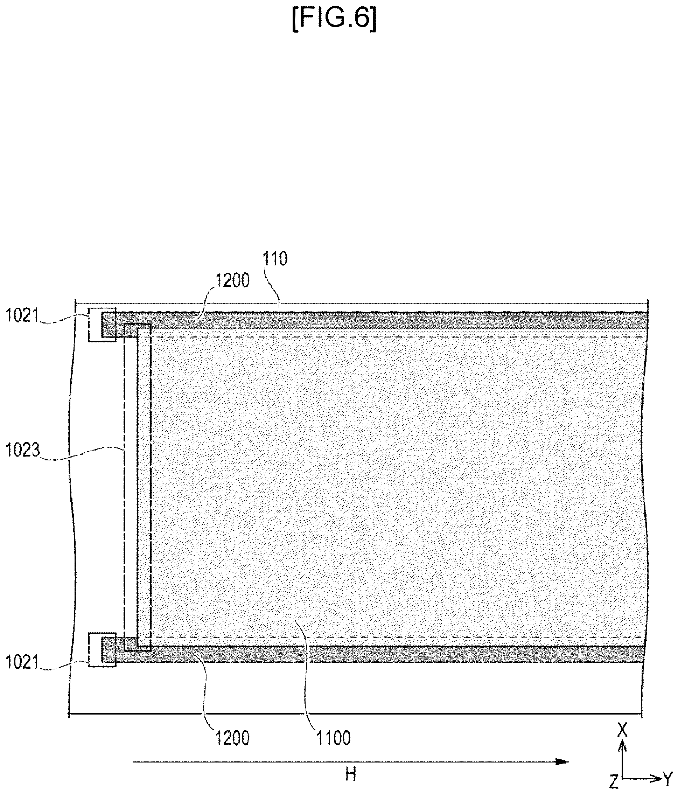

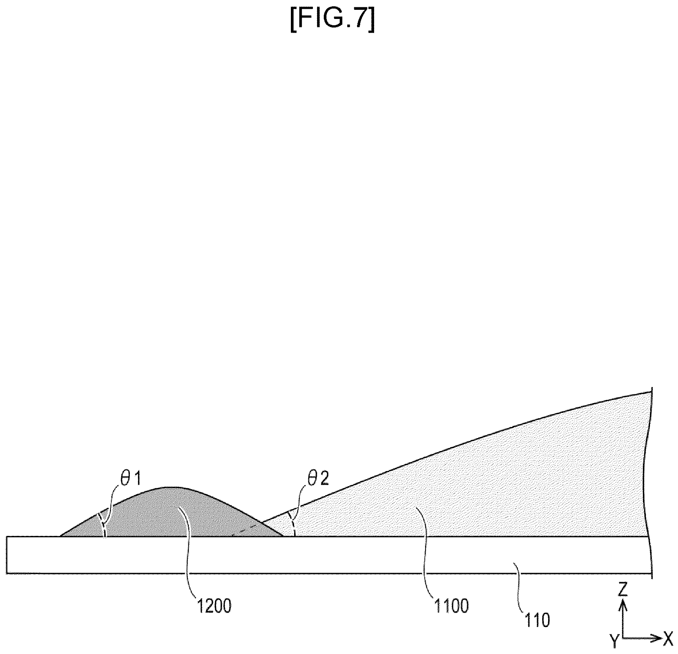

About a manufacturing method for the positive electrode 100, a description will be made with reference to FIGS. 5 to 7. FIG. 5 is a side view schematically depicting the manufacturing method for the positive electrode 100. FIG. 6 is a top view depicting, in a schematic view, coated states of slurries on the positive electrode collector layer 110 in FIG. 5. FIG. 7 is a side view depicting, in a schematic view, coated states of a positive electrode active material slurry 1100 and an intermediate layer slurry 1200 coated on the positive electrode collector layer 110.

In the manufacturing method for the positive electrode 100, the positive electrode active material layer slurry 1100 and intermediate layer slurry 1200 are applied in a coating step. In the coating step, the intermediate layer slurry 1200 is applied onto the positive electrode collector layer 110. In addition, the positive electrode active material slurry 1100 is applied onto the positive electrode collector layer 110 and intermediate layer slurry 1200 in the coating step. In the coating step, a thickness of the intermediate layer slurry 1200 to be applied onto the positive electrode collector layer 110 is set to 1/10 or greater and 1/2 or smaller of a thickness of the positive electrode active material layer slurry 1100 to be applied onto the positive electrode collector layer 110. A contact angle θ1 of the intermediate layer slurry 1200 to the positive electrode collector layer 110 is set to 1° or greater and 35° or smaller in the coating step as depicted in FIG. 7. The contact angle is a contact angle based on a θ/2 method (a half-angle method). In this case, a contact angle θ2 of the positive electrode active material slurry 1100 to the positive electrode collector layer 110 becomes equal to or smaller than θ1.

The positive electrode active material layer slurry 1100 to be used in the coating step contains a solvent in addition to the constituent materials of the positive electrode active material layer 120. In the constituent materials of the positive electrode active material layer 120, the positive electrode active material 121, positive electrode binder 122, and positive electrode conductive aid 123 are included. The solvent disperses the materials contained in the positive electrode active material layer 120. As the solvent, one that has volatility at temperatures equal to and higher than room temperature is used, for example. The solvent is, for example, N-methyl-2-pyrrolidone (N-methylpyrrolidone, NMP).

The intermediate layer slurry 1200 to be used in the coating step contains a solvent in addition to the constituent materials of the intermediate layer 130. The solvent disperses the particles 131, the binder 132, and the like materials contained in the intermediate layer 130. As the solvent, one that has volatility at temperatures equal to and higher than room temperature is used, for example. The solvent is, for example, N-methyl-2-pyrrolidone (N-methylpyrrolidone, NMP).

A manufacturing device 1000 for the positive electrode 100 includes a transport section 1010, a coating section 1020, a drying section 1030, and a rolling section 1040 as depicted in FIG. 5.

The transport section 1010 transports the member constituting the positive electrode 100, as depicted in FIG. 5. The transport section 1010 includes a transport roller 1011.

The transport section 1010 transports the positive electrode collector layer 110, which is in a state of being wound on an undepicted first roller, to the coating section 1020, drying section 1030, and rolling section 1040 by means of the transport roller 1011 and the like. The transport section 1010 winds the positive electrode collector layer 110, with which the positive electrode active material layer 120 and intermediate layer 130 are joined, on an undepicted second roller. When the second roller with the positive electrode collector layer 110 held thereon is rotated, the positive electrode collector layer 110 is transported while the transport roller 1011 and first roller, which are in contact with the positive electrode collector layer 110, are also rotating. A transport direction H of the positive electrode collector layer 110 corresponds to the lengthwise direction Y of the positive electrode collector layer 110.

The coating section 1020 applies the slurries to the positive electrode collector layer 110, etc. as depicted in FIG. 5. The coating section 1020 includes first coating heads 1021, a first supply pipe 1022, a second coating head 1023, and a second supply pipe 1024.

Two first coating heads 1021 are disposed along the widthwise direction X orthogonal to the transport direction H of the positive electrode collector layer 110, that is, orthogonal to the lengthwise direction Y of the positive electrode collector layer 110 as depicted in FIGS. 5 and 6. The two first coating heads 1021 oppose each other along the widthwise direction X of the positive electrode collector layer 110. An opening is formed in each first coating head 1021. The opening is connected to the first supply pipe 1022. Each of the first coating heads 1021 is supplied with the intermediate layer slurry 1200 from an undepicted tank via an undepicted pump and the first supply pipe 1022. The first coating heads 1021 oppose the transport roller 1011 with the positive electrode collector layer 110 interposed therebetween. With the positive electrode collector layer 110 being transported, the first coating heads 1021 apply the intermediate layer slurry 1200 onto the positive electrode collector layer 110. The intermediate layer slurry 1200 is applied onto the positive electrode collector layer 110 such that the resulting layers of the intermediate layer slurry 1200 oppose each other in the widthwise direction of the positive electrode collector layer 110, and extend along the lengthwise direction of the positive electrode collector layer 110.

The second coating head 1023 is disposed along the widthwise direction X of the positive electrode collector layer 110 as depicted in FIGS. 5 and 6. The second coating head 1023 is disposed side by side with the two first coating heads 1021 along the transport direction H of the positive electrode collector layer 110. The second coating head 1023 is located on a downstream side relative to the first coating heads 1021 in the transport direction H of the positive electrode collector layer 110. An elongated opening is formed in the second coating head 1023. The elongated opening is connected to the second supply pipe 1024. To the second coating head 1023, the positive electrode active material layer slurry 1100 is supplied from an undepicted tank via an undepicted pump and the second supply pipe 1024. The second coating head 1023 opposes the transport roller 1011 with the positive electrode collector layer 110 interposed therebetween. With the positive electrode collector layer 110 being transported, the second coating head 1023 applies the positive electrode active material slurry 1100 onto the positive electrode collector layer 110 and intermediate layer slurry 1200.

The drying section 1030 dries the slurries as depicted in FIG. 5. The drying section 1030 is disposed on a downstream side relative to the coating section 1020 in the transport direction H of the positive electrode collector layer 110. The drying section 1030 includes a drier 1031.

The drier 1031 is disposed along the transport direction H of the positive electrode collector layer 110, that is, along the lengthwise direction Y of the positive electrode collector layer 110, as depicted in FIG. 5. With the positive electrode collector layer 110 being transported, the drier 1031 dries the positive electrode active material layer slurry 1100 and intermediate layer slurry 1200. The drier 1031 includes a plurality of heat sources along the transport direction H of the positive electrode collector layer 110. The drier 1031 dries, using these heat sources, the positive electrode active material layer slurry 1100 and intermediate layer slurry 1200 under a plurality of conditions.

At the drying section 1030, the positive electrode active material layer slurry 1100 forms the positive electrode active material layer 120 owing to vaporization of the solvent. Through vaporization of NMP contained in the positive electrode active material layer slurry 1100, the positive electrode active material layer slurry 1100 dries. Along with the drying, the positive electrode active material layer slurry 1100 decreases in thickness along the stacking direction Z. The positive electrode active material layer 120 is joined with the positive electrode collector layer 110. The intermediate layer slurry 1200 forms the intermediate layers 130 owing to vaporization of the solvent. Through vaporization of NMP contained in the intermediate layer slurry 1200, the intermediate layer slurry 1200 dries. Along with the drying, the intermediate layer slurry 1200 decreases in thickness along the stacking direction Z. The intermediate layers 130 are joined with the positive electrode collector layer 110 and positive electrode active material layer 120.

The rolling section 1040 rolls the positive electrode collector layer 110, positive electrode active material layer 120, and intermediate layers 130, which are in a mutually joined state, as depicted in FIG. 5. The rolling section 1040 is disposed on a downstream side relative to the drying section 1030 in the transport direction H of the positive electrode collector layer 110. The rolling section 1040 includes a rolling roller 1041 and a driven roller 1042.

The rolling roller 1041 is disposed along the widthwise direction X of the positive electrode collector layer 110 as depicted in FIG. 5. The rolling roller 1041 opposes the positive electrode active material layer 120 and intermediate layers 130 out of the positive electrode 100. The driven roller 1042 is disposed along the widthwise direction X of the positive electrode collector layer 110 as depicted in FIG. 5. The driven roller 1042 opposes the rolling roller 1041 with the positive electrode 100 interposed therebetween. The driven roller 1042 opposes the positive electrode collector layer 110 out of the positive electrode 100. The rolling section 1040 defines the thickness of the positive electrode active material layer 120 by a spacing between the rolling roller 1041 and the driven roller 1042.

In the manufacturing method for the positive electrode 100, the configurations described with reference to FIGS. 5 and 6 are those in which the positive electrode active material layer 120 and intermediate layers 130 are joined with one side surface of the positive electrode collector layer 110. Therefore, the manufacturing method for the positive electrode 100 as depicted in FIGS. 5 and 6 is what is called a one-side coating manufacturing method for the positive electrode 100. On the other hand, in the positive electrode 100, as depicted in FIG. 3, the positive electrode active material layer 120 and intermediate layers 130 are joined, for example, with both side surfaces of the positive electrode collector layer 110. Therefore, the positive electrode 100 depicted in FIG. 3 is formed by what is called both-side coating. Accordingly, in the manufacturing method for the positive electrode 100, the positive electrode active material layer 120 and intermediate layers 130 are joined with the other side surface of the positive electrode active material layer 120 after the configurations described with reference to FIGS. 5 and 6.

### (Results of Comparative Experiment between Positive Electrode 100 in First Embodiment and Positive Electrode of Comparative Example)

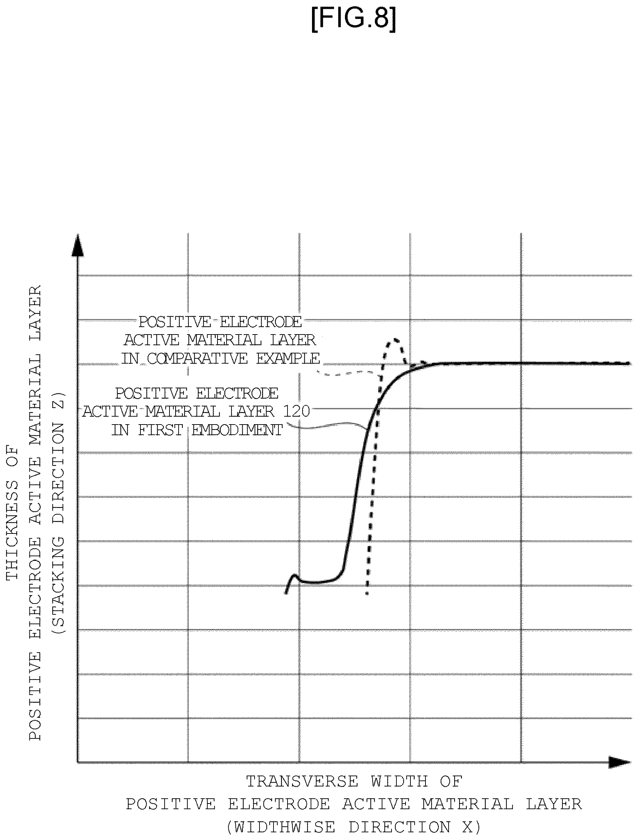

About the results of a comparative experiment between the positive electrode 100 in the first embodiment and a positive electrode of a comparative example, a description will be made with reference to FIG. 8. FIG. 8 is a graph illustrating measurement results of profiles of the positive electrode active material layer 120 of the positive electrode 100 in the first embodiment and a positive electrode active material layer in the comparative example.

The solid line graph illustrated in FIG. 8 represents the measurement results of the profile of the positive electrode active material layer 120 of the positive electrode 100 in the first embodiment. The dashed line graph illustrated in FIG. 8 represents the measurement results of the profile of the positive electrode active material layer of the positive electrode of the comparative example. The positive electrode 100 in the first embodiment and the positive electrode of the comparative example are made different in manufacturing conditions, only whether or not the intermediate layers 130 are disposed. In the positive electrode 100 in the first embodiment, the intermediate layers 130 are disposed. In the positive electrode of the comparative example, no intermediate layers 130 are disposed. The coordinates in FIG. 8 represent the layer thickness in the stacking direction Z of the positive electrode active material layer. The abscissas in FIG. 8 represent the distance in the widthwise direction X of the positive electrode active material layer.

As illustrated in FIG. 8, the positive electrode active material layer 120 of the positive electrode 100 in the first embodiment is not bulged upward toward the stacking direction Z at each end portion thereof. In other words, the positive electrode active material layer 120 of the positive electrode 100 in the first embodiment is suppressed from becoming relatively thicker than the rest of the positive electrode active material layer 120. On the other hand, the positive electrode active material layer of the positive electrode of the comparative example is bulged upward toward the stacking direction Z at the end portion thereof. In other words, the positive electrode active material layer of the positive electrode of the comparative example is relatively thicker than the rest of the positive electrode active material layer. A bulge at each end portion of the positive electrode active material layer in the comparative example is thicker by 2% or greater compared with the average layer thickness of the positive electrode active material layer.

### (Effects of Battery 1 etc. Including Positive Electrode 100 in First Embodiment)

A description will be made about the effects of the battery 1 etc. including the positive electrode 100 in the first embodiment.

(1), (5), (9), and (10) The positive electrode 100 (electrode) has the intermediate layers 130 (intermediate layers). Each intermediate layer 130 is disposed intermediate along the stacking direction Z between the side of the end portion 110b of the positive electrode collector layer 110 (collector layer) and the end portion 120b of the positive electrode active material layer 120 (active material layer). The intermediate layer 130 is joined with the positive electrode collector layer 110 and positive electrode active material layer 120. According to such configurations, the end portions 120b of the positive electrode active material layer 120 (the positive electrode active material layer slurry 1100 at the time of the manufacture of the positive electrode 100) joined with the positive electrode collector layer 110 can be suppressed from becoming relatively thicker by their bounce from the positive electrode collector layer 110 at the time of the manufacture. In other words, the end portions 120b of the positive electrode active material layer 120 joined with the positive electrode collector layer 110 can be suppressed from being bounced from the positive electrode collector layer 110 owing to the interposition of the intermediate layers 130 (the intermediate layer slurry 1200 at the time of the manufacture of the positive electrode 100) at the time of the manufacture. The bouncing of the positive electrode active material layer slurry 1100 from the positive electrode collector layer 110 means that the compatibility between the positive electrode active material layer slurry 1100 and the positive electrode collector layer 110 is relatively low. The capability of suppression of bouncing of the positive electrode active material layer slurry 1100 from the intermediate layers 130 means that the compatibility between the positive electrode active material layer slurry 1100 and the intermediate layer slurry 1200 is relatively high. As a result, the electrode 100 can be obtained with both the end portions 120b of each positive pole active material layer 120 being suppressed from becoming relatively thicker than the rest of the positive electrode active material layer 120. Further, according to such configurations, the battery 1 can be obtained with the positive electrode 100 suppressed from becoming thicker at both the end portions 120b of each positive electrode active material layer 120. In other words, according to such configurations, the thickness of each positive electrode active material layer 120 can be made uniform.

(2) Each intermediate layer 130 extends while crossing to the end portion 120b of the positive electrode active material layer 120 along the widthwise direction X intersecting the stacking direction Z, and is joined with the positive electrode collector layer 110. According to such configurations, the end portions 120b of the positive electrode active material layer 120 (the positive electrode active material layer slurry 1100 at the time of the manufacture of the positive electrode 100) joined with the positive electrode collector layer 110 can be sufficiently suppressed from being bounced from the positive electrode collector layer 110 at the time of the manufacture. Both the end portions 120b of each positive electrode active material layer 120 are most easily bounded from the positive electrode collector layer 110 at the time of the manufacture. In other words, both the end portions 120b of the positive electrode active material layer 120 joined with the positive electrode collector layer 110 can be sufficiently suppressed from being bounced from the positive electrode collector layer 110 owing to the sufficient interposition of the intermediate layers 130 at the time of the manufacture.

(3) Each intermediate layer 130 is longer in the first length L1 along the widthwise direction X of the portion remote from the positive electrode active material layer 120 than in the second length L2 along the widthwise direction X of the portion joined with the positive electrode active material layer 120. In the intermediate layer 130, the portion remote from the positive electrode active material layer 120 is the portion joined with only the positive electrode collector layer 110. In the intermediate layer 130, the portion joined with the positive electrode active material layer 120 is the portion joined with both the positive electrode collector layer 110 and the positive electrode active material layer 120. According to such configurations, the end portions 120b of the positive electrode active material layer 120, the end portions 120b being joined with the positive electrode collector layer 110, can be sufficiently suppressed from being peeled off from the positive electrode collector layer 110.

(6) Each positive electrode active material layer 120 is 10 µm or greater and 60 µm or smaller in thickness. As the positive electrode active material layer 120 (the positive electrode active material layer slurry 1100 at the time of the manufacture of the positive electrode 100) becomes relatively thinner, it becomes relatively more prone to be bounced from the positive electrode collector layer 110 at the time of the manufacture. The thickness of the positive electrode active material layer 120 is relatively thin when it is 10 µm or greater and 60 µm or smaller. Owing to the existence of the intermediate layers 130 in the positive electrode 100, however, the end portions 120b of each positive electrode active material layer 120 joined with the positive electrode collector layer 110 can be suppressed from being bounced from the positive electrode collector layer 110 at the time of the manufacture.

(7) Each intermediate layer 130 has the thickness t1 along the stacking direction Z in the region where the intermediate layer 130 is joined with the positive electrode active material layer 120, and the thickness t1 is 1/10 or greater and 1/2 or smaller of the thickness t2 in the stacking direction Z of the positive electrode active material layer 120. According to such configurations, while suppressing, by the intermediate layers 130 (the intermediate layer slurry 1200 at the time of the manufacture of the positive electrode 100), the end portions 120b of each positive electrode active material layer 120 (the positive electrode active material layer slurry 1100 at the time of the manufacture of the positive electrode 100) from being bounced by the positive electrode collector layer 110 at the time of the manufacture, the thickness of each intermediate layer 130 that does not contribute to a battery reaction can be suppressed.

(8) The intermediate layers 130 contain the particles 131 having insulating properties. According to such a configuration, the intermediate layers 130 can be formed with the particles 131 having high versatility.

(11) The intermediate layers 130 oppose the negative electrode active material layers 220 of the negative electrode 200 with the separator 300 (insulator) interposed therebetween. According to such a configuration, the insulation between the positive electrode 100 and the negative electrode 200 can be complemented.

(12) In the manufacturing method for the positive electrode 100, the intermediate layer slurry 1200 is applied with a contact angle set to 1° or greater and 35° or smaller onto the positive electrode collector layer 110 of aluminum in the coating step. According to such a configuration, the intermediate layer slurry 1200 can be suppressed from being bounced by the positive electrode collector layer 110.

(13) In the coating step, the intermediate layer slurry 1200 is applied with a contact angle set to 25° or smaller onto the positive electrode collector layer 110 of aluminum. According to such a configuration, the intermediate layer slurry 1200 can be sufficiently suppressed from being bounced by the positive electrode collector layer 110.

(14) In the coating step, the thickness of the intermediate layer slurry 1200 to be applied onto the positive electrode collector layer 110 is set to 1/10 or greater and 1/2 or smaller of the thickness of the positive electrode active material layer slurry 1100 to be applied onto the positive electrode collector layer 110. According to such a configuration, while suppressing, by the intermediate layer slurry 1200, the end portions of the positive electrode active material layer slurry 1100 from being bounced by the positive electrode collector layer 110, the thickness of each intermediate layer 130 that does not contribute to the battery reaction can be suppressed.

### (Configurations of Positive Electrode 400 in Second Embodiment)

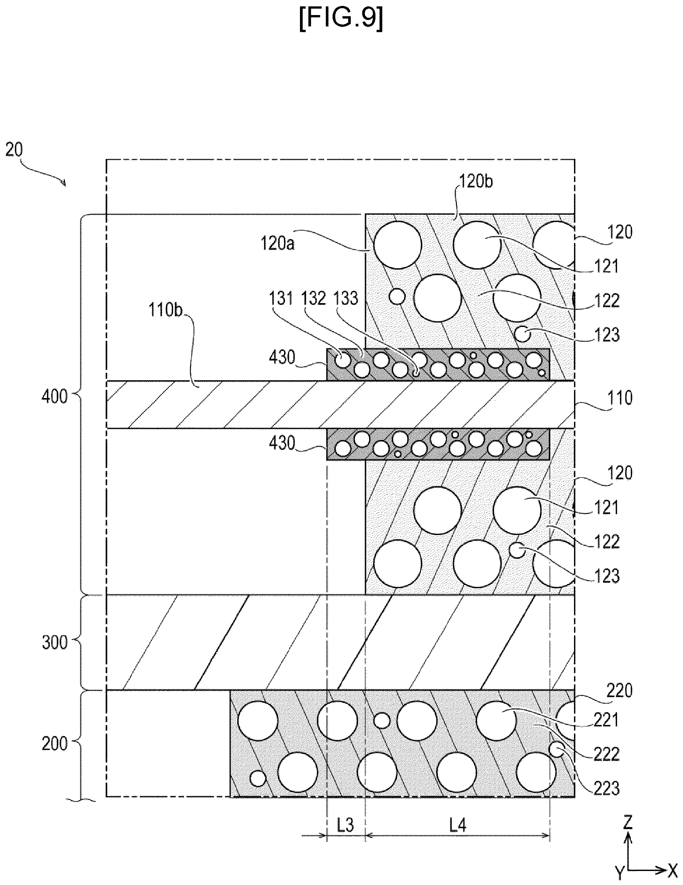

About the configurations of the positive electrode 400 in the second embodiment, a description will be made with reference to FIG. 9. FIG. 9 is a cross-sectional view depicting a charge/discharge body 20 in a battery of the second embodiment.

Compared with the positive electrode 100 in the first embodiment, the positive electrode 400 is made different in the arrangement of intermediate layers 430 relative to the positive electrode collector layer 110 and positive electrode active material layers 120. With respect to the second embodiment, in the configuration that is the same as the configuration of the first embodiment, the same reference characters are assigned and their description is omitted.

Each intermediate layer 430 is shorter in a third length L3 along the widthwise direction X of a portion remote from the positive electrode active material layer 120 than in a fourth length L4 along the widthwise direction X of a portion joined with the positive electrode active material layer 120, as depicted in FIG. 9. The portion remote from the positive electrode active material layer 120 is a portion where the intermediate layer 430 is joined with only the positive electrode collector layer 110. The portion joined with the positive electrode active material layer 120 is a portion where the intermediate layer 430 is joined with both the positive electrode collector layer 110 and the positive electrode active material layer 120. Each intermediate layer 430 is arranged relatively more in a region, where the positive electrode active material layer 120 and the positive electrode collector layer 110 exist, than in a region, where the positive electrode active material layer 120 does not exist and only the positive electrode collector layer 110 exists, along the widthwise direction X, as depicted in FIG. 9.

### (Effects of Positive Electrode 400 in Second Embodiment)

A description will be made about the effects of the positive electrode 400 in the second embodiment.

(4) Each intermediate layer 430 is shorter in the third length L3 of the portion remote from the positive electrode active material layer 120 than in the fourth length L4 of the portion joined with the positive electrode active material layer 120. According to such a configuration, the end portions 120b of the positive electrode active material layer 120 (the positive electrode active material layer slurry 1100 at the time of the manufacture of the positive electrode 100) joined with the positive electrode collector layer 110 can be sufficiently suppressed from being bounced from the positive electrode collector layer 110 at the time of the manufacture. In other words, both the end portions 120b of the positive electrode active material layer 120 joined with the positive electrode collector layer 110 can be sufficiently suppressed from being bounced from the positive electrode collector layer 110 owing to the sufficient interposition of the intermediate layers 130 at the time of the manufacture.

### (Configurations of Positive Electrode 500 in Third Embodiment)

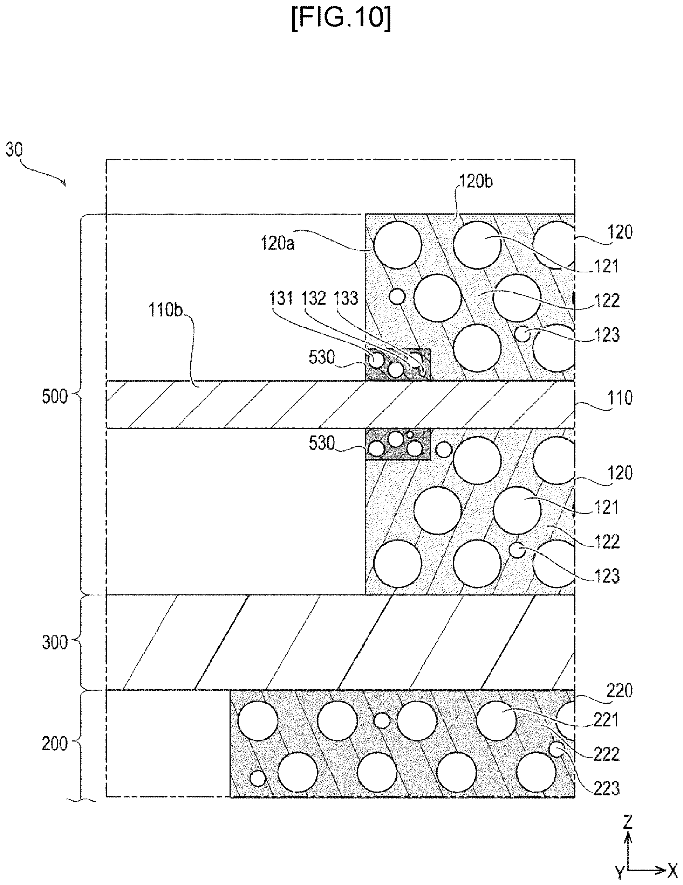

About the configurations of the positive electrode 500 in the third embodiment, a description will be made with reference to FIG. 10. FIG. 10 is a cross-sectional view depicting a charge/discharge body 30 in a battery of the third embodiment.

Compared with the positive electrode 100 in the first embodiment, the positive electrode 500 is made different in the arrangement of intermediate layers 530 relative to the positive electrode collector layer 110 and positive electrode active material layers 120. With respect to the third embodiment, in the configuration that is the same as the configuration of the first embodiment, the same reference characters are assigned and their description is omitted.

Each intermediate layer 530 is disposed only between the positive electrode collector layer 110 and the positive electrode active material layer 120 along the stacking direction Z as depicted in FIG. 10. The intermediate layer 530 is sandwiched between the positive electrode collector layer 110 and the positive electrode active material layer 120. No intermediate layer 530 is disposed in a region, where the positive electrode active material layer 120 does not exist and only the positive electrode collector layer 110 exists, along the widthwise direction X. The intermediate layer 530 is disposed in a region, where the positive electrode active material layer 120 and the positive electrode collector layer 110 exist, along the widthwise direction X. The third embodiment is of a configuration in which no intermediate layer 130 is intentionally disposed at the region where the positive electrode active material layer 120 does not exist and only the positive electrode collector layer 110 exists. In other words, the third embodiment embraces a configuration in which, due to manufacturing error, the intermediate layer 130 exists within the range of manufacturing error in the region where the positive electrode active material layer 120 does not exist and only the positive electrode collector layer 110 exists.

### (Effects of Positive Electrode 500 in Third Embodiment)

A description will be made about the effects of the positive electrode 500 in the third embodiment.
(1) Each intermediate layer 530 is disposed only between the positive electrode collector layer 110 and the positive electrode active material layer 120 along the stacking direction Z as depicted in FIG. 10. According to such a configuration, while sufficiently suppressing the end portions 120b of each positive electrode active material layer 120 (the positive electrode active material layer slurry 1100 at the time of the manufacture of the positive electrode 100) from being bounced from the positive electrode collector layer 110 at the time of the manufacture, the intermediate layers 130 that does not contribute to the battery reaction can be minimized.

### (Batteries of other embodiments)

Without being limited to the configurations of the batteries described in the embodiments, batteries of the present invention can be appropriately configured based on the details described in the claims.

The embodiments are described in detail or in a simplified manner for easy understanding of the present invention, so that the present invention is not absolutely needed to include all the configurations described or may include undepicted or unillustrated configurations.
Further, a part of the configurations of one of the embodiments may be deleted, replaced by a part of the configurations of another embodiment, or combined with a part of the configurations of another embodiment.

In the electrode (positive electrode) in the present invention, the positive electrode active material is not limited to a nickel (Ni)-, cobalt (Co)-, or manganese (Mn)-based one. The positive electrode active material in the present invention may be, for example, an Fe (olivine iron)-based one.

In the electrode (negative electrode) in the present invention, the negative electrode active material is not limited to a carbon-based one. The negative electrode active material in the present invention may be, for example, a silicon-based one.

The battery of the present invention is not limited to the configuration in which the charge/discharge body is sealed by the container and lid. The battery of the present invention can be used for a configuration in which the charge/discharge body is sealed by a laminated film.

The battery of the present invention is not limited to a lithium ion battery. The battery of the present invention can be used, for example, for a nickel-hydrogen battery.

The battery of the present invention is not limited to a secondary battery. The battery of the present invention can be used for a primary battery.

In the battery of the present invention, the charge/discharge body is not limited to a wound type where a positive electrode, a separator, and a negative electrode, which are formed in elongated shapes, respectively, are bundled and wound. As the charge/discharge body in the battery of the present invention, it is possible to use a stacked type where a positive electrode, a separator, and a negative electrode, which are formed in rectangular shapes, respectively, are alternately stacked in a plurality of layers.

In the battery of the present invention, it is possible to use, as a charge/discharge body, a stacked type where a plurality of positive electrodes and a plurality of negative electrodes, which are formed relatively short compared with a single separator formed in an elongated shape, are alternately disposed while opposing each other with the separator interposed therebetween. In the charge/discharge body of such a configuration, positive electrodes and negative electrodes oppose each other with the separator interposed therebetween by folding and stacking the separator.

In the battery of the present invention, the charge/discharge body is not limited to a rectangular parallelepiped type. As the charge/discharge body in the battery of the present invention, a cylindrical or columnar type can be used.

In the battery of the present invention, the charge/discharge body is not limited to the configuration in which the separator having insulating properties is disposed between the positive electrode and the negative electrode. The battery of the present invention can be used for a configuration in which an insulating layer is disposed on at least one of a positive electrode and a negative electrode without disposing a separator. Such a configuration corresponds to what is called a separatorless configuration.

In the battery of the present invention, the charge/discharge body can be used for a configuration in which an insulating layer is disposed on the positive electrode 100 and/or an insulating layer is disposed on the negative electrode 200 in addition to the configuration in which the separator 300 is disposed between the positive electrode 100 and the negative electrode 200.

In the battery of the present invention, the charge/discharge body is not limited to the configuration in which the charge/discharge body is disposed alone. The battery of the present invention can be used for a configuration in which two or more charge/discharge bodies are disposed.

The electrodes (positive electrode and negative electrode) in the present invention are not limited to the configuration in which the collector plates are joined with the end portions of the collector layers. The electrodes of the battery of the present invention can be used for a type in which electrode tabs extending to the outside from edge of the collector layers are joined to the collector plates.

The electrodes (positive electrode and negative electrode) in the present invention are not limited to the configuration in which the active material layers are joined with both side surfaces of each collector layer respectively. The electrodes can be used for a configuration in which the active material layer is joined with only one side surface of each collector layer.

The manufacturing method of the present invention for the electrode (positive electrode and negative electrode) is not limited to the configuration in which the active material layer and intermediate layers are formed by concurrently applying and drying the active material layer slurry and the intermediate layer slurry. The manufacturing method of the present invention for the electrode (positive electrode and negative electrode) can be applied to a configuration in which the intermediate layer slurry is first applied onto the collector layer and dried to form the intermediate layers. In the case of such a configuration, the active material layer slurry is next applied between the collector layer and the intermediate layers, and dried to form the active material layer.

The manufacturing method of the present invention for the electrode (positive electrode and negative electrode) is not limited to the configuration in which the first coating heads and the second coating head are independently disposed. The manufacturing method of the present invention for the electrode (positive electrode and negative electrode) can be applied to a configuration in which the first coating heads and the second coating head are integrated together.

### Description of Reference Characters

1: battery
10, 20, 30: charge/discharge body
50: outer package
51: container
52: lid
53: electrolyte filling hole plug
54: rupture valve
60: outer terminal
61: positive electrode terminal
62: negative electrode terminal
100, 400, 500: positive electrode (electrode)
110: positive electrode collector layer (collector layer)
110a: positive electrode collector portion
110b: end portion
120: positive electrode active material layer (active material layer)
120b: end portion
121: positive electrode active material (active material)
122: positive electrode binder
123: positive electrode conductive aid
130, 430, 530: intermediate layer
131: particle
132: binder
133: additive
200: negative electrode
210: negative electrode collector layer
210a: negative electrode collector portion
220: negative electrode active material layer
221: negative electrode active material
222: negative electrode binder
223: negative electrode conductive aid
300: separator (insulator)
1000: manufacturing device
1010: transport section
1011: transport roller
1020: coating section
1021: first coating head
1022: first supply pipe
1023: second coating head
1024: second supply pipe
1030: drying section
1031: drier
1040: rolling section
1041: rolling roller
1042: driven roller
1100: positive electrode active material layer slurry
1200: insulating layer slurry
t1: thickness (along the stacking direction Z of each intermediate layer 130)
t2: thickness (along the stacking direction Z of each positive electrode active material layer 120)
L1: first length (along the widthwise direction X of a portion, which is remote from the positive electrode active material layer 120, of each intermediate layer 130)
L2: second length (along the widthwise direction X of a portion, which is joined with the positive electrode active material layer 120, of each intermediate layer 130)
L3: third length (along the widthwise direction X of a portion, which is remote from the positive electrode active material layer 120, of each intermediate layer 130)
L4: fourth length (along the widthwise direction X of a portion, which is joined with the positive electrode active material layer 120, of each intermediate layer 130)
θ1: contact angle (of the intermediate layer slurry 1200 to the positive electrode collector layer 110)
θ2: contact angle (of the positive electrode active material layer slurry 1100 to the positive electrode collector layer 110)
X: widthwise direction (of the positive electrode 100, negative electrode 200, and separator 300)
Y: lengthwise direction (of the positive electrode 100, negative electrode 200, and separator 300)
Z: stacking direction (of the positive electrode 100, negative electrode 200, and separator 300)
H: transport direction (lengthwise direction Y) (of the positive electrode 100, negative electrode 200, and separator 300)

## Claims

1. An electrode comprising:
a collector layer;
an active material layer stacked on and joined with the collector layer, and containing an active material; and
an intermediate layer disposed intermediate along a stacking direction between a side of an end portion of the collector layer and an end portion of the active material layer, and joined with the collector layer and the active material layer.

2. The electrode according to claim 1, wherein
the intermediate layer extends while crossing to the end portion of the active material layer along a cross direction intersecting the stacking direction, and is joined with the collector layer.

3. The electrode according to claim 2, wherein
the intermediate layer has
a first length along the cross direction of a portion remote from the active material layer,
the first length being longer than a second length along the cross direction of a portion joined with the active material layer.

4. The electrode according to claim 2, wherein
the intermediate layer has
a third length along the cross direction of a portion remote from the active material layer,
the third length being shorter than a fourth length along the cross direction of a portion joined with the active material layer.

5. The electrode according to claim 1, wherein
the collector layer is a positive electrode collector layer, and
the active material layer is a positive electrode active material layer containing a positive electrode active material.

6. The electrode according to claim 1, wherein
the active material layer has a thickness of 10 µm or greater and 60 µm or smaller.

7. The electrode according to claim 1, wherein
the intermediate layer has a thickness along the stacking direction in a region where the intermediate layer is joined with the active material layer, the thickness being 1/10 or greater and 1/2 or smaller of a thickness in the stacking direction of the active material layer.

8. The electrode according to claim 1, wherein
the intermediate layer contains particles having insulating properties.

9. A battery comprising:
a positive electrode;
a negative electrode; and
an insulator insulating the positive electrode and the negative electrode from each other, wherein
at least one of the positive electrode and the negative electrode has
a collector layer,
an active material layer stacked on and joined with the collector layer, and containing an active material, and
an intermediate layer disposed intermediate along a stacking direction between a side of an end portion of the collector layer and an end portion of the active material layer, and joined with the collector layer and the active material layer.

10. The battery according to claim 9, as applied for the positive electrode.

11. The battery according to claim 10, wherein
the intermediate layer of the positive electrode opposes a negative electrode active material layer of the negative electrode with the insulator interposed therebetween.

12. A method of manufacturing a positive electrode including
a positive electrode collector layer,
a positive electrode active material layer stacked on and joined with the positive electrode collector layer, and containing a positive electrode active material, and
an intermediate layer disposed intermediate along a stacking direction between a side of an end portion of the positive electrode collector layer and an end portion of the positive electrode active material layer, and joined with the positive electrode collector layer and the positive electrode active material layer, the method comprising;
a coating step of:
by using
the positive electrode collector layer that contains aluminum,
an intermediate layer slurry that contains particles and a solvent having volatility, and is to form the intermediate layer after being applied onto the positive electrode collector layer, and
a positive electrode active material layer slurry that contains the positive electrode active material and the solvent having volatility, and is to form the positive electrode active material layer after being applied onto the positive electrode collector layer and the intermediate layer slurry,
applying the intermediate layer slurry, and the positive electrode active material layer slurry, wherein,
in the coating step,
the intermediate layer slurry is applied onto the positive electrode collector layer with a contact angle set to 1° or greater and 35° or smaller, and
the positive electrode active material layer slurry is applied onto the positive electrode collector layer and the intermediate layer slurry.

13. The method of manufacturing the positive electrode, according to claim 12, wherein,
in the coating step, the intermediate layer slurry is applied onto the positive electrode collector layer with the contact angle set to 25° or smaller.

14. The method of manufacturing the positive electrode, according to claim 12, wherein,
in the coating step, a thickness of the intermediate slurry to be applied onto the positive electrode collector layer is set to 1/10 or greater and 1/2 or smaller of a thickness of the positive electrode active material slurry to be applied onto the positive electrode collector layer.
